# EUROPEAN PATENT APPLICATION

(11) **EP 4 589 700 A1**
(43) Date of publication of application: **23.07.2025**
(21) Application number: 23886277.5
(22) Date of filing: 01.11.2023
(51) Int. Cl.: H01M 10/04, H01M 50/531, H01M 10/42, H01M 10/0587

(54) **ELECTRODE ASSEMBLY**

(30) Priority: 01.11.2022 KR 20220144045
(71) Applicant: LG Energy Solution, Ltd., Seoul 07335 (KR)
(72) Inventor: LEE, Joong Hoon, Daejeon 34122 (KR); KIM, Hyoung Kwon, Daejeon 34122 (KR); HAN, In Kee, Daejeon 34122 (KR); KIM, Yun Hwa, Daejeon 34122 (KR)
(74) Representative: Goddar, Heinz J.
(86) International application number: PCT/KR2023/017286
(87) International publication number: WO 2024/096581

(57) **Abstract**

The present invention relates to an electrode assembly having a wound structure, and more particularly, to an electrode assembly for improving a problem of cracks or disconnections in a negative electrode by relieving stress generated in the negative electrode facing an outer end of a positive electrode.

An electrode assembly has a structure in which a positive electrode, a separator, and a negative electrode are wound in a stacked state and which includes a central hole at a center thereof, wherein an outer end of the negative electrode is disposed outside an outer end of the positive electrode with respect to the central hole, the positive electrode includes: a positive electrode collector; and positive electrode slurry applied on the positive electrode collector, the negative electrode includes: a negative electrode collector; negative electrode slurry applied on the negative electrode collector; and a negative electrode tab disposed on the negative electrode collector, wherein the negative electrode tab is disposed at a position through which a virtual line passing through the outer end of the positive electrode and a center point of the central hole passes. :

## Description

### TECHNICAL FIELD

### CROSS-REFERENCE TO RELATED APPLICATION

The present application claims the benefit of the priority of Korean Patent Application No. 10-2022-0144045, filed on November 1, 2022, which is hereby incorporated by reference in its entirety.

### TECHNICAL FIELD

The present invention relates to an electrode assembly having a wound structure, and more particularly, to an electrode assembly for improving a problem of cracks or disconnections in a negative electrode by relieving stress generated in the negative electrode facing an outer end of a positive electrode.

### BACKGROUND ART

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated.

That is, when the reduction reaction to the material is performed by the current, power is charged, and when the oxidation reaction to the material is performed by the current, power is discharged. Here, such the charging-discharging are repeatedly performed.

Among various types of secondary batteries, lithium secondary batteries are generally manufactured by mounting an electrode assembly, in which a positive electrode (cathode), a separator, and a negative electrode (anode) are stacked, in a case. Here, as a process, in which lithium ions are intercalated and deintercalated from lithium metal oxide to the negative electrode, is repeated to charge and discharge the lithium secondary batteries.

In the electrode assembly, a plurality of unit cells, each in which a negative electrode, a separator, and a positive electrode, each of which is generally cut to a predetermined size, are stacked in a predetermined order, are stacked, or an individual positive electrode/separator/negative electrode is repeatedly stacked to form one electrode assembly. Also, the electrode assembly is accommodated in a case such as a cylindrical can and a prismatic pouch.

As a method for manufacturing the electrode assembly, a winding type electrode assembly in which the separator is stacked between the negative electrode and the positive electrode and then wound to manufacture an electrode assembly, a stacking type electrode assembly in which each of a negative electrode and a positive electrode is cut by a desired width and length, and then, the negative electrode, the separator, the positive electrode are repeatedly stacked to form an electrode assembly, and a stack and folding type electrode assembly in which unit cells are placed parallel to each other on a folding separator and then folded from one side to manufacture an electrode assembly have been known.

Among these, the winding-type (jell roll-type) electrode assembly is manufactured by fixing a first separator to a core and sequentially inputting a negative electrode, a second separator, and a positive electrode during rotation of the core (in some cases, the order of inputting of the separator, the negative electrode, and the positive electrode may be changed).

In the cylindrical-type battery, due to structural characteristics thereof, a positive electrode, a negative electrode, and a separator between the positive electrode and the negative electrode overlap each other and then are wound in a cylindrical shape to manufacture a jelly roll, and then, the jelly roll is put into a metal can to manufacture a battery cell having a cylindrical shape. In the related art, when charging, the negative electrode is expanded to usually increase in thickness by about 10% to 20%. The jelly roll may increase in outer diameter due to the structural characteristics of the cylindrical battery, and the outermost negative electrode increases in circumference to cause stretching of a copper collector. In particular, when the negative electrode facing a stepped portion of an end of the positive electrode is expanded, if concentration of stress to the stepped portion of the end of the positive electrode is severe, there is a problem in that copper foil as well as the negative electrode is damaged. Particularly, with the recent trend of developing high-capacity cylindrical cell, energy density of the electrode is designed to increase, and a thickness of the copper foil is gradually becoming thinner, and thus, there is a problem that a risk of cracks or disconnections in the negative electrode gradually increases.

### DISCLOSURE OF THE INVENTION

### TECHNICAL PROBLEM

An object of the present invention for solving the above problem is to provide an electrode assembly in which stress generated in a negative electrode facing an outer end of a positive electrode is relieved to improve a problem of occurrence of cracks and disconnection of a negative electrode.

### TECHNICAL SOLUTION

An electrode assembly according to an embodiment of the present invention may have a structure in which a positive electrode, a separator, and a negative electrode are wound in a stacked state and which includes a central hole at a center thereof, wherein an outer end of the negative electrode is disposed outside an outer end of the positive electrode with respect to the central hole, the positive electrode includes: a positive electrode collector; and positive electrode slurry applied on the positive electrode collector, the negative electrode includes: a negative electrode collector; negative electrode slurry applied on the negative electrode collector; and a negative electrode tab disposed on the negative electrode collector, wherein the negative electrode tab is disposed at a position through which a virtual line passing through the outer end of the positive electrode and a center point of the central hole passes.

The negative electrode tab may include: an outer negative electrode tab disposed outside the outer end of the positive electrode with respect to the central hole; and an inner negative electrode tab disposed inside the outer end of the positive electrode with respect to the central hole, wherein the outer negative electrode tab may be disposed at the position through which the virtual line passes.

The negative electrode collector may include: a bottom surface that is a surface facing a direction of the central hole; and a top surface disposed opposite to the bottom surface.

The negative slurry may be applied on the top surface and the bottom surface, which face the outer end of the positive electrode, from the outer end of the positive electrode by a preset length toward the outer end of the negative electrode, and the negative electrode slurry may not be applied from the outer end of the positive electrode up to the outer end of the negative electrode after the preset length.

The outer negative electrode tab may be disposed at positions at which the negative electrode slurry is not applied to both the top surface and the bottom surface.

The outer negative electrode tab may be disposed on the top surface, and a first protective tape may be attached to the bottom surface corresponding to the surface on which the outer negative electrode tab is disposed.

A second protective tape may be attached to the top surface facing the bottom surface to which the first protective tape is attached.

The separator may be disposed between the first protective tape and the second protective tape.

The first protective tape may be provided to be longer than the outer negative electrode tab.

The first protective tape may be provided to be the same or longer than the second protective tape.

The outer negative electrode tab may be disposed on the bottom surface, and a third protective tape may be attached to the top surface corresponding to the surface on which the outer negative electrode tab is disposed.

A second protective tape may be attached on the top surface facing the bottom surface to which the outer negative electrode tab is attached, and the separator may be disposed between the outer negative electrode tab and the second protective tape.

### ADVANTAGEOUS EFFECTS

The stress generated in the negative electrode facing the outer end of the positive electrode may be relieved through the embodiment of the present invention to improve the problem of the occurrence of the cracks and the disconnection of the negative electrode.

### BRIEF DESCRIPTION OF THE DRAWINGS

FIG. 1 is a view illustrating a state in which separators are omitted, and positive and negative electrodes are wound in an electrode assembly according to a related art.
FIG. 2 is a plan view illustrating ends of the positive and negative electrodes in the electrode assembly according to the related art.
FIG. 3 is a view illustrating a state in which separators are omitted, positive and negative electrodes are wound in an electrode assembly according to Embodiment 1 of the present invention.
FIG. 4 is a plan view illustrating ends of the positive and negative electrodes in the electrode assembly according to Embodiment 1 of the present invention.
FIG. 5 is a view illustrating a state in which separators are omitted, and positive and negative electrodes are wound in an electrode assembly according to Embodiment 2 of the present invention.
FIG. 6 is a plan view illustrating ends of the positive and negative electrodes in the electrode assembly according to Embodiment 2 of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

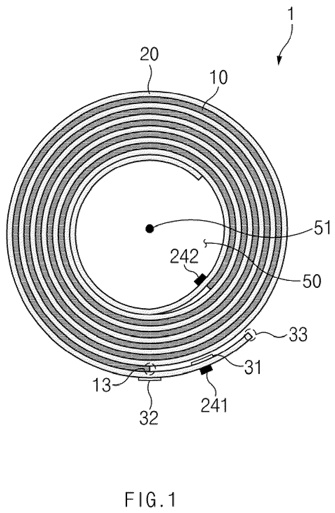

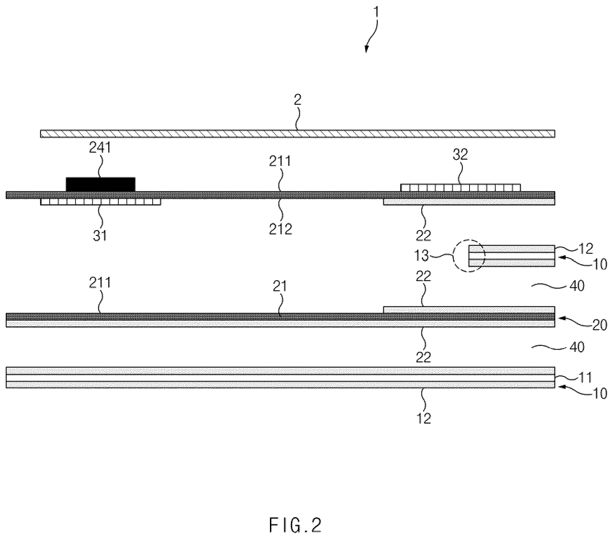

FIG. 1 is a view illustrating a state in which separators are omitted, and positive and negative electrodes are wound in an electrode assembly according to a related art, and FIG. 2 is a plan view illustrating ends of the positive and negative electrodes in the electrode assembly according to the related art.

As seen in FIGS. 1 and 2, in an electrode assembly 1 according to the related art, when a negative electrode 20 is expanded, stress is concentrated to a stepped portion of an outer end 13 of a positive electrode 10 to cause a crack problem in which the negative electrode 20 is damaged.

Hereinafter, an embodiment of the electrode assembly 1 for solving this problem will be described.

### Embodiment 1

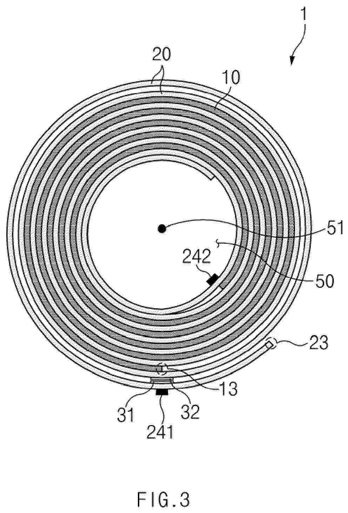

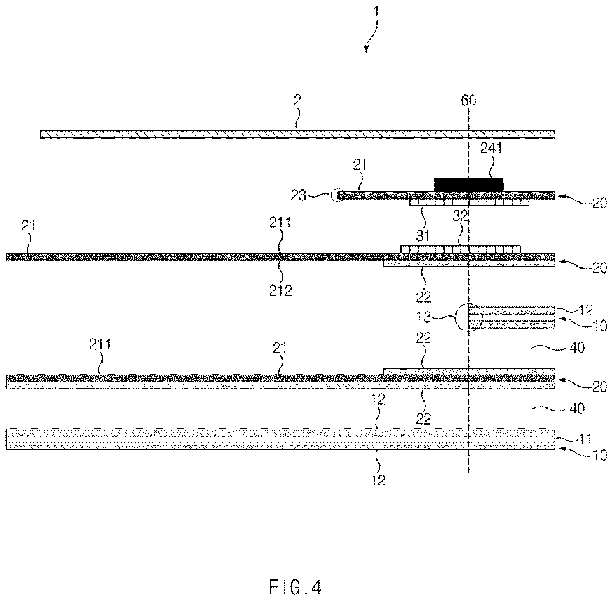

Hereinafter, an electrode assembly according to Embodiment 1 of the present invention will be described in detail with reference to FIGS. 3 and 4.

FIG. 3 is a view illustrating a state in which separators are omitted, positive and negative electrodes are wound in an electrode assembly according to Embodiment 1 of the present invention, and FIG. 4 is a plan view illustrating ends of the positive and negative electrodes in the electrode assembly according to Embodiment 1 of the present invention.

Referring to FIGS. 3 and 4, an electrode assembly 1 may include an positive electrode 10, a separator 40, a negative electrode 20, and a central hole 50. The positive electrode 10, the separator 40, and the negative electrode 20 of the electrode assembly 1 may have a structure in which the positive electrode 10, the separator 40, and the negative electrode 20 are wound in a stacked state. The central hole 50 may be defined at a center of the electrode assembly 1. When the electrode assembly 1 is manufactured, the negative electrode 20 may be put in before the positive electrode 10 is put in, and thus, an inner end (not shown) of the negative electrode 20 is disposed closer to the center hole 50 than an inner end (not shown) of the positive electrode 10.

The positive electrode 10 may include a positive electrode collector 11 and positive electrode slurry 12. An outer end 13 of the positive electrode 10 may be disposed inside an outer end 23 of the negative electrode 20. The positive electrode 10 may be coated with the positive electrode slurry 12 on both surfaces up to the outer end 13.

The negative electrode 20 may include a negative electrode collector 21, negative electrode slurry 22, and a negative electrode tab 24.

The outer end 23 of the negative electrode 20 may be disposed outside the outer end 13 of the positive electrode 10 with respect to the central hole 50.

The central hole 50 may be defined due to the structure in which the negative electrode 20, the positive electrode 10, and the separator 40 are wound. A center point 51 may be disposed at a center of the center hole 50.

The negative electrode tab 24 may be disposed at a position through which a virtual line 60 passing through the outer end 13 of the positive electrode 10 and the center point 51 of the center hole 50 passes. The negative electrode tab 24 may include an outer negative electrode tab 241 and an inner negative electrode tab 242. The negative electrode tab 24 may be disposed at a position through which the virtual line 60 passes to support the negative electrode 20.

The outer negative electrode tab 241 may be disposed outside the outer end 13 of the positive electrode 10 with respect to the central hole 50. The outer negative electrode tab 241 may be disposed at the position through which the virtual line 60 passes. In order for the outer negative electrode tab 241 to be disposed on the virtual line 60, the negative electrode 20 may extend to be elongated, and thus, one more layer of the negative electrode 20 may be disposed at the outermost layer.

The inner negative electrode tab 242 may be disposed inside the outer end 13 of the positive electrode 10 with respect to the central hole 50. The inner negative electrode tab 242 may be disposed on the negative electrode 20 facing the central hole 50.

The negative electrode collector 21 may include a top surface 211 and a bottom surface 212. The bottom surface 212 of the negative electrode collector 21 may be disposed to face the central hole 50. The top surface 211 of the negative electrode collector 21 may be disposed on an opposite surface of the bottom surface 212. Both the top surface 211 and the bottom surface 212 of the negative electrode collector 21 may be disposed parallel to each other.

In the negative electrode collector 21, the negative slurry 22 may be applied on the top surface 211 and the bottom surface 212 facing the outer end 13 of the positive electrode 10 from the outer end 13 of the positive electrode 10 by a preset length toward the outer end 23 of the negative electrode 20. There is no need to apply the negative electrode slurry 22 to the top surface 211 and the bottom surface 212 corresponding to a portion at which the positive electrode 10 is not disposed. The negative electrode slurry 22 may not be applied on the top surface 211 and the bottom surface 212 facing the outer end 13 of the positive electrode 10 from the outer end 13 of the positive electrode 10 up to the outer end 23 of the negative electrode 20 after the preset length.

The outer negative electrode tab 241 may be disposed at a point at which the negative electrode slurry 22 is not applied to both the top surface 211 and the bottom surface 212. The outer negative electrode tab 241 may be disposed on the top surface 211.

The electrode assembly 1 may further include a protective tape 30. A first protective tape 31 and a second protective tape 32 may be attached to the negative electrode collector 21.

The first protective tape 31 may be attached to the bottom surface 212 corresponding to a surface on which the outer negative electrode tab 241 is disposed. The first protective tape 31 may be disposed to be longer than the outer negative electrode tab 241. The first protective tape 31 may protect a portion protruding from a corresponding surface as the outer negative electrode tab 241 is disposed on the negative electrode 20.

The second protective tape 32 may be attached to the top surface 211 facing the bottom surface 212 to which the first protective tape 31 is attached. The second protective tape 32 may be attached to the top surface 211 corresponding to the point at which the negative electrode slurry 22 is applied to the bottom surface 212. The second protective tape 32 may protect the top surface 211 of the negative electrode 20 on which the negative electrode slurry 22 is not applied.

The separator 40 may be disposed between the first protective tape 31 and the second protective tape 32.

In Embodiment 1 of the present invention, as the outer negative electrode tab 241 is disposed on the virtual line 60 passing between the center point 51 of the center hole 50 and the outer end 13 of the positive electrode 10, when the electrode assembly 1 is charged, the negative electrode may be expanded to solve the crack problem in which the stress is concentrated to the negative electrode 20 facing the outer end 13 of the positive electrode 10 to damage the negative electrode 20. That is, when the outer negative electrode tab 241 is disposed on the virtual line 60, a gap between the case 2 of the electrode assembly 1 and the outer end 23 of the negative electrode 20 is narrowed. Thus, when the negative electrode 20 is expanded during charging/discharging of the electrode assembly 1, a degree to which the negative electrode 20 is expanded may decrease as the gap becomes narrower compared to the related art, and thus the degree to which stretching occurs may also decrease. This has an effect of reducing a degree to which a thickness of the negative electrode 20 is reduced. Since the degree to which the thickness of the negative electrode 20 decreases is reduced, even if the same stress is concentrated to the negative electrode 20, the risk of cracking the negative electrode 20 may be naturally reduced compared to the related art to prevent the negative electrode 20 from being damaged.

### Embodiment 2

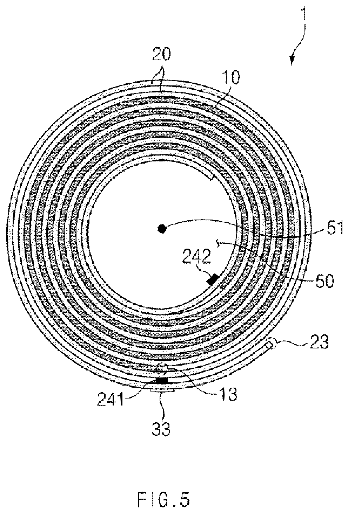

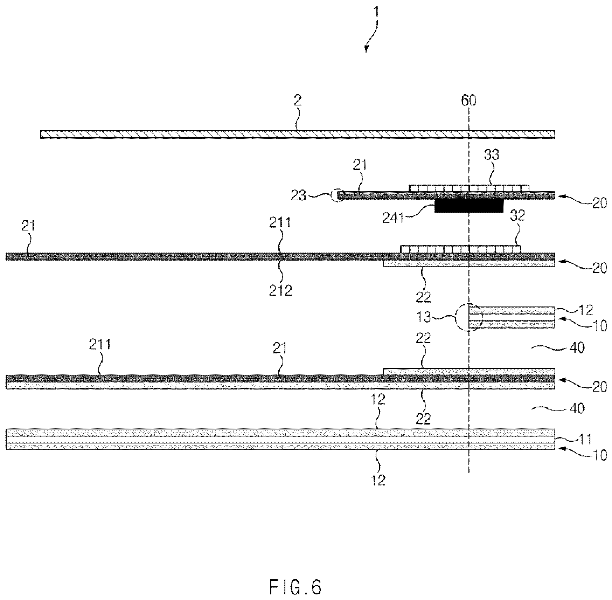

Hereinafter, an electrode assembly according to Embodiment 2 of the present invention will be described in detail with reference to FIGS. 5 and 6.

FIG. 5 is a view illustrating a state in which separators are omitted, and positive and negative electrodes are wound in an electrode assembly according to Embodiment 2 of the present invention, and FIG. 6 is a plan view illustrating ends of the positive and negative electrodes in the electrode assembly according to Embodiment 2 of the present invention.

Embodiment 2 of the present invention may be different from Embodiment 1 in that a position of an outer negative electrode tab 241 is different, and a third protective tape 33 is provided. The contents that are duplicated with Embodiment 1 will be omitted as much as possible, and Embodiment 2 will be described with a focus on the differences.

An outer negative electrode tab 241 may be disposed on a bottom surface 212. An electrode assembly 1 may further include a third protective tape 33.

A second protective tape 32 may be attached to a top surface 211 facing the bottom surface 212 to which an outer negative tab 241 is attached.

A separator 40 may be disposed between the outer negative electrode tab 241 and the second protective tape 32.

In Embodiment 2 of the present invention, the outer negative electrode tab 241 may be disposed on a virtual line 60 passing through a center point 51 of the central hole 50 and an outer end 13 of a positive electrode 10 and disposed on a bottom surface 212 of a negative electrode 20 to solve a crack problem in which, when the electrode assembly 1 is charged/discharged, the negative electrode 20 is expanded so that stress is concentrated to the negative electrode 20 to damage the negative electrode 20.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1: Electrode assembly
2: Electrode assembly case
10: Positive electrode
11: Positive electrode collector
12: Positive electrode slurry
20: Negative electrode
21: Negative electrode collector
22: Negative electrode slurry
24: Negative electrode tab
241: Outer negative electrode tab
242: Inner negative electrode tab
30: Protective tape
31: First protective tape
32: Second protective tape
33: Third protective tape
40: Separator
50: Central hole
60: Virtual line

## Claims

1. An electrode assembly having a structure in which a positive electrode, a separator, and a negative electrode are wound in a stacked state and which comprises a central hole at a center thereof,
wherein an outer end of the negative electrode is disposed outside an outer end of the positive electrode with respect to the central hole,
the positive electrode comprises:
a positive electrode collector; and
positive electrode slurry applied on the positive electrode collector,
the negative electrode comprises:
a negative electrode collector;
negative electrode slurry applied on the negative electrode collector; and
a negative electrode tab disposed on the negative electrode collector,
wherein the negative electrode tab is disposed at a position through which a virtual line passing through the outer end of the positive electrode and a center point of the central hole passes.

2. The electrode assembly of claim 1, wherein the negative electrode tab comprises:
an outer negative electrode tab disposed outside the outer end of the positive electrode with respect to the central hole; and
an inner negative electrode tab disposed inside the outer end of the positive electrode with respect to the central hole,
wherein the outer negative electrode tab is disposed at the position through which the virtual line passes.

3. The electrode assembly of claim 2, wherein the negative electrode collector comprises:
a bottom surface that is a surface facing a direction of the central hole; and
a top surface disposed opposite to the bottom surface.

4. The electrode assembly of claim 3, wherein the negative slurry is applied on the top surface and the bottom surface, which face the outer end of the positive electrode, from the outer end of the positive electrode by a preset length toward the outer end of the negative electrode, and
the negative electrode slurry is not applied from the outer end of the positive electrode up to the outer end of the negative electrode after the preset length.

5. The electrode assembly of claim 4, wherein the outer negative electrode tab is disposed at positions at which the negative electrode slurry is not applied to both the top surface and the bottom surface.

6. The electrode assembly of claim 5, wherein the outer negative electrode tab is disposed on the top surface, and
a first protective tape is attached to the bottom surface corresponding to the surface on which the outer negative electrode tab is disposed.

7. The electrode assembly of claim 6, wherein a second protective tape is attached to the top surface facing the bottom surface to which the first protective tape is attached.

8. The electrode assembly of claim 7, wherein the separator is disposed between the first protective tape and the second protective tape.

9. The electrode assembly of claim 8, wherein the first protective tape is provided to be longer than the outer negative electrode tab.

10. The electrode assembly of claim 9, wherein the first protective tape is provided to be the same or longer than the second protective tape.

11. The electrode assembly of claim 5, wherein the outer negative electrode tab is disposed on the bottom surface, and
a third protective tape is attached to the top surface corresponding to the surface on which the outer negative electrode tab is disposed.

12. The electrode assembly of claim 11, wherein a second protective tape is attached on the top surface facing the bottom surface to which the outer negative electrode tab is attached, and
the separator is disposed between the outer negative electrode tab and the second protective tape.
